# EUROPÄISCHE PATENTANMELDUNG

(11) **EP 4 597 763 A1**
(43) Veröffentlichungstag der Anmeldung: **06.08.2025**
(21) Anmeldenummer: 25305129.6
(22) Anmeldetag: 30.01.2025
(51) Int. Cl.: H01R 13/52, H01R 13/74, H01R 13/46, H01R 13/631

(54) **ANSCHLUSSANORDNUNG MIT EINBAU-ANSCHLUSSVORRICHTUNG UND AUFSTECK-ANSCHLUSSVORRICHTUNG**

(30) Priorität: 31.01.2024 DE 102024102767
(71) Anmelder: Nexans, 92400 Courbevoie (FR)
(72) Erfinder: VÖLKL, Franz, 92400 COURBEVOIE (FR); STEINERT, Alexander, 92400 COURBEVOIE (FR); RIEDEL, Richard, 92400 COURBEVOIE (FR)
(74) Vertreter: Ipsilon

(57) **Zusammenfassung**

Einbau-Anschlussvorrichtung (100) zum Einbau in eine Gehäuseöffnung umfasst einen Korpus (102) mit einem Einbauabschnitt (120) runden Querschnitts und einen Anschlussabschnitt (140). Der Einbauabschnitt (120) umfasst ein zur Dichtung gegenüber der Gehäuseöffnung oder der diese enthaltenden Gehäusewand eingerichtetes umlaufendes Dichtmittel (122) und ist am Übergang zu dem Anschlussabschnitt (140) von einer Anschlagstruktur (138) begrenzt. Der Einbauabschnitt (120) weist außerdem eine oder mehrere zur Fixierung des Einbauabschnitts (120) in der Gehäuseöffnung bzw. an der die Gehäuseöffnung umgebenden Wand eingerichtete Fixierungsstrukturen (124) auf. Auf der dem Einbauabschnitt (120) gegenüberliegenden Seite der Anschlagstruktur (130) ist ein Kragen (142) mit umlaufend geschlossener Wand an die Anschlagstruktur angeformt. In dem Korpus (102) ist ein Halter (150) entnehmbar dichtungslos gelagert und fixiert. Der Halter (150) ist zur lösbaren dichtungslosen Aufnahme einer oder mehrerer erster Leitungsverbindungsvorrichtungen (160) eingerichtet, welche jeweils eine Verbindungsstelle einer damit verbundenen Leitung (170) für eine entsprechende, in einer mit dem Anschlussabschnitt (140) gekoppelten Aufsteck-Anschlussvorrichtung (200) vorgesehenen zweiten Leitungsverbindungsvorrichtung bereitstellen. Der Halter ist so in dem Korpus (102) gelagert, dass die eine oder mehreren ersten Leitungsverbindungsvorrichtungen (160) innerhalb des von der Kragenwand umschlossenen Raums zugänglich sind.

## Beschreibung

### Gebiet

Die vorliegende Erfindung betrifft eine Anschlussanordnung zum Einbau in eine Gehäuseöffnung mit einer Einbau-Anschlussvorrichtung und einer komplementären Aufsteck-Anschlussvorrichtung.

### Hintergrund

In vielen Bereichen der Technik werden Anschlussanordnungen für elektrische oder Fluid-Verbindungen genutzt, mit denen eine oder mehrere Leitungen aus einem Gehäuse heraus- oder in dieses hineingeführt werden.

Geschlossene, gegen das Eindringen von Festkörpern oder Fluiden abgedichtete Gehäuse erfordern in der Regel Anschlussanordnungen, welche die Dichtigkeit des Gehäuses nicht kompromittieren. Üblicherweise werden dazu die Leitungen einzeln gegen eine in eine Gehäuseöffnung eingesetzte Einbau-Anschlussvorrichtung abgedichtet, und die Einbau-Anschlussvorrichtung wird gegen das Gehäuse abgedichtet.

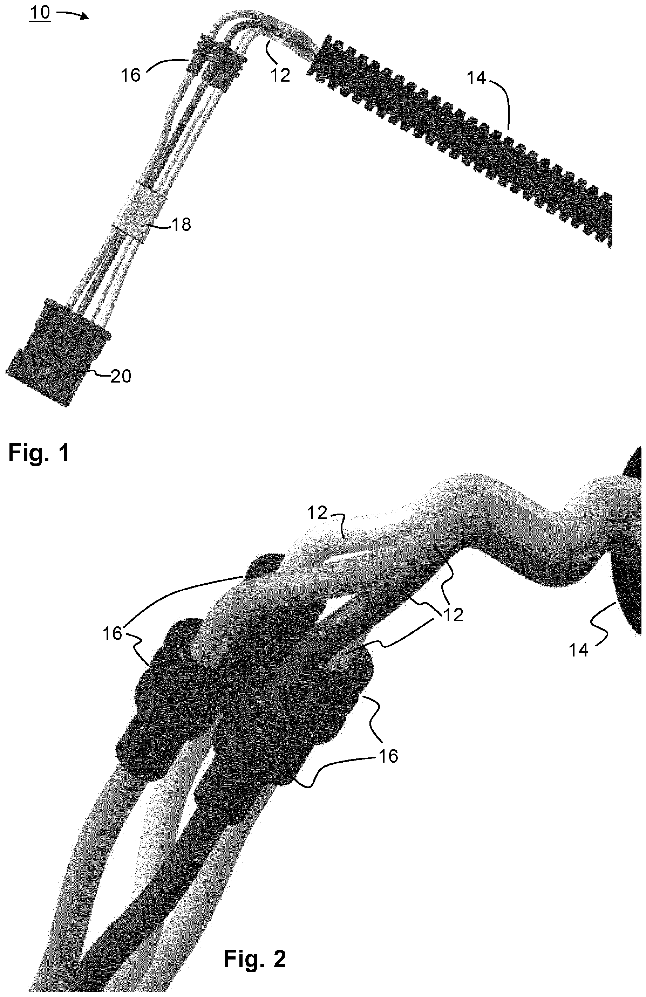

Teile einer beispielhaften Anschlussanordnung 10 bekannter Bauart sind in Figur 1 dargestellt. In dem Beispiel sind vier elektrische Leitungen 12 aus einem Wellrohr 14 herausgeführt. Jede der Leitungen 12 ist mit einer Dichtung 16 versehen. Die Leitungen sind mittels einer Hülse 18 in ihrer Lage zu einem Steckverbinder 20 fixiert. Eine vergrößerte Darstellung der um die einzelnen Leitungen angeordneten Dichtungen ist in Figur 2 gezeigt.

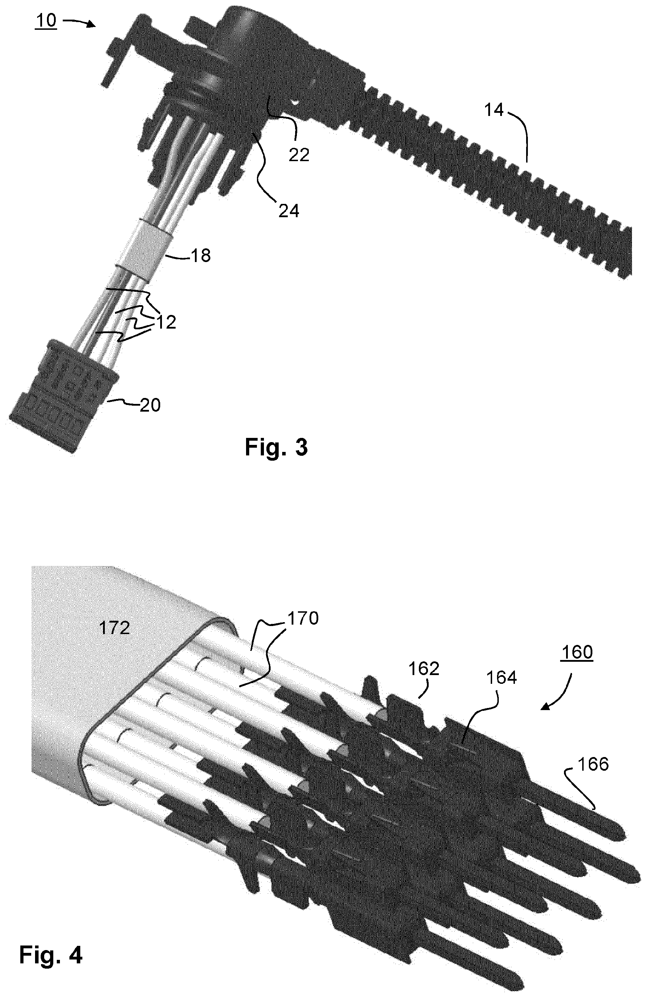

Figur 3 zeigt die beispielhafte Anschlussanordnung 10 im komplettierten Zustand. Die Leitungen 12 sind in einem Anschlussgehäuse 22 geführt, welches an seiner Außenseite in einem in einer Gehäuseöffnung (nicht in der Figur gezeigt) zu platzierenden Abschnitt eine umlaufende Dichtung 24 aufweist. Die Dichtungen 16 der Leitungen wirken im Innern des Anschlussgehäuses 22 mit Durchführungen für die Leitungen zusammen und bewirken so die vollständige Dichtigkeit eines Gehäuses mit der in die Gehäuseöffnung eingesetzten Anschlussanordnung 10. Bei der Montage der bekannten Anschlussanordnung 10 ist zunächst der Steckverbinder 20 durch die Gehäuseöffnung zu führen und im Innern des Gehäuses zu verbinden, und danach ist das Anschlussgehäuse 22 in die Gehäuseöffnung einzusetzen. Es ist leicht erkennbar, dass je nach Lager der Anschlüsse im Innern des Gehäuses ggf. ein weiterer Zugang vorhanden sein muss.

Alternativ können Anschlussanordnungen für elektrische oder Fluid-Verbindungen genutzt werden, bei denen eine oder mehrere Leitungen aus einem Gehäuse herausgeführt werden und an einer mit dem Gehäuse verbundenen und dieses abdichtenden Einbau-Anschlussvorrichtung zur Kontaktierung bereitgestellt werden. Die Einbau-Anschlussvorrichtung kann dabei einen Stecker oder eine Buchse bereitstellen, die mit einer dazu komplementären Buchse bzw. einem Stecker die gewünschte Verbindung herstellen. Stecker und Buchse werden häufig auch als männliche bzw. weibliche Anschlussvorrichtung bezeichnet, bzw. mit deren englischen Begriffen "male" bzw. "female". Ein Beispiel für eine solche alternative Anschlussanordnung sind die Steckverbinder nach dem MIL-C Standard. Hier werden eine oder mehrere Leitungen mit Steckkontakten oder Steckhülsen verbunden und in einem Gehäuse festgelegt. Eine Gummidichtung mit Löchern für jeden Steckkontakt bzw. jede Steckhülse liegt an der offenen Seite in dem Gehäuse. Die Gummidichtung wird beim Verbinden eines entsprechenden Gegenstücks zusammengepresst und dichtet jeden Steckkontakt bzw. jede Steckhülse ab. Die Dichtung jedes einzelnen Steckkontakts bzw. jeder Steckhülse stellt recht hohe Anforderungen an die Maßhaltigkeit der Bauteile und die Passgenauigkeit des Gegenstücks, sowie an die Kraft, mit der das Gegenstück angebracht wird. Außerdem entsteht eine Vielzahl möglicher undichter Stellen, was die Fehlersuche erschwert.

Es ist daher eine Aufgabe der Erfindung, eine Anschlussanordnung mit einer Einbau-Anschlussvorrichtung und einer Aufsteck-Anschlussvorrichtung vorzuschlagen, welche die Anzahl der einzelnen Dichtstellen verringert.

### Beschreibung der Erfindung

Diese Aufgabe wird durch die in Anspruch 1 angegebene Einbau-Anschlussvorrichtung gelöst, welche zusammen mit der in Anspruch 5 angegebenen Aufsteck-Anschlussvorrichtung die wesentlichen Teile der in Anspruch 7 angegebenen Anschlussanordnung darstellen. Vorteilhafte Ausgestaltungen und Weiterbildungen sind in den jeweiligen abhängigen Ansprüchen angegeben.

Gemäß einem ersten Aspekt der Erfindung umfasst eine Einbau-Anschlussvorrichtung zum Einbau in eine Gehäuseöffnung einen Korpus mit einem Einbauabschnitt runden Querschnitts und einen Anschlussabschnitt. Der Einbauabschnitt umfasst ein zur Dichtung gegenüber der Gehäuseöffnung oder der diese enthaltenden Gehäusewand eingerichtetes radial umlaufendes Dichtmittel. Am Übergang zu dem Anschlussabschnitt ist der Einbauabschnitt von einer Anschlagstruktur begrenzt. Der Einbauabschnitt weist außerdem eine oder mehrere zur Fixierung des Einbauabschnitts in der Gehäuseöffnung bzw. an der die Gehäuseöffnung umgebenden Wand eingerichtete Fixierungsstrukturen auf. Die Fixierungsstrukturen können selbst flexibel sein, bspw. aus Kunststoff oder Metall, oder können flexibel gelagert sein. In letzterem Fall können die Fixierungsstrukturen selbst starr sein. Die Fixierungsstrukturen können bspw. Rasthaken oder dergleichen umfassen, welche in entsprechende Aussparungen der Gehäuseöffnung eingreifen oder hinter die Gehäusewand greifen. Die Fixierungsstrukturen sind dazu eingerichtet, im in eine geeignete Gehäuseöffnung eingebauten Zustand eine Bewegung der in der Gehäuseöffnung eingebauten Einbau-Anschlussvorrichtung in der Einbaurichtung zu begrenzen oder zu verhindern.

Die Aussparungen oder Strukturen der Gehäuseöffnung bzw. der diese umgebenden Wand können so gestaltet sein, dass eine Drehung des eingesetzten Korpus um einen Mindestwinkel, ggf. unter zeitgleicher Ausübung einer Zugkraft auf die Einbau-Anschlussvorrichtung, die Fixierungsstrukturen zur Mitte des Korpus hin auslenken, so dass die Fixierungsstrukturen nicht mehr über den Außenumfang des Einbauabschnitts hinausragt und die Einbau-Anschlussvorrichtung aus der Gehäuseöffnung entnehmbar ist.

Auf der dem Einbauabschnitt gegenüberliegenden Seite der Anschlagstruktur ist ein Kragen mit umlaufend geschlossener Wand an die Anschlagstruktur angeformt. In dem Korpus ist ein Halter entnehmbar dichtungslos gelagert und fixiert, welcher zur lösbaren dichtungslosen Aufnahme einer oder mehrerer erster Leitungsverbindungsvorrichtungen eingerichtet ist. Die Leitungsverbindungsvorrichtungen stellen jeweils eine Verbindungsstelle einer damit verbundenen Leitung für eine entsprechende, in einer mit dem Anschlussabschnitt gekoppelten Aufsteck-Anschlussvorrichtung gemäß einem weiter unten beschriebenen zweiten Aspekt der Erfindung vorgesehenen zweiten Leitungsverbindungsvorrichtung bereit. Der Halter ist so in dem Korpus gelagert, dass die eine oder mehreren ersten Leitungsverbindungsvorrichtungen innerhalb des von der Kragenwand umschlossenen Raums zugänglich sind. In diesem Kontext schließt zugänglich ein, dass die ersten Leitungsverbindungsvorrichtungen von den zweiten Leitungsverbindungsvorrichtungen kontaktierbar sind, wenn die Aufsteck-Anschlussvorrichtung bestimmungsgemäß mit der Einbau-Anschlussvorrichtung gekoppelt ist.

Wie bereits weiter oben erläutert, kann eine Leitungsverbindungsvorrichtung Kontaktstifte, Kontakthülsen, Federkontakte, Fluidkupplungen oder dergleichen umfassen.

Bei einer oder mehreren Ausgestaltungen der Einbau-Anschlussvorrichtung sind an der Kragenwand eine oder mehrere erste Führungsstrukturen zur Positionierung und/oder Führung einer Aufsteck-Anschlussvorrichtung gemäß dem zweiten Aspekt der Erfindung vorgesehen. Alternativ oder zusätzlich sind an der Kragenwand eine oder mehrere erste Verriegelungsstrukturen zur Verriegelung einer mit dem Anschlussabschnitt gekoppelten Aufsteck-Anschlussvorrichtung gemäß dem zweiten Aspekt der Erfindung vorgesehen.

Bei einer oder mehreren Ausgestaltungen der Einbau-Anschlussvorrichtung sind an der Anschlagstruktur eine oder mehrere Positionierungsstrukturen zur Positionierung der Einbau-Anschlussvorrichtung in einer Gehäuseöffnung vorgesehen. Diese Positionierungsstrukturen können auskragende oder hervorstehende Strukturen umfassen, welche mit entsprechenden Strukturen des Gehäuses zusammenwirken und eine Lage- oder Positionsveränderung der Einbau-Anschlussvorrichtung in der Gehäuseöffnung begrenzen oder verhindern, insbesondere eine Rotation der Einbau-Anschlussvorrichtung um eine parallel zur Einbaurichtung verlaufende Achse.

Während das umlaufende Dichtmittel der erfindungsgemäßen Einbau-Anschlussvorrichtung die Dichtigkeit gegenüber Fluiden und Festkörpern zwischen dem Gehäuse und dem Korpus herstellt, ist eine Dichtigkeit zwischen Korpus und Halter oder zwischen Halter und den ein oder mehreren Leitungsverbindungsvorrichtungen nicht notwendigerweise sichergestellt. Die komplette Dichtigkeit der Anschlussanordnung wird erst durch die Kopplung mit einer Aufsteck-Anschlussvorrichtung gemäß dem zweiten Aspekt der Erfindung hergestellt.

Eine Aufsteck-Anschlussvorrichtung gemäß dem zweiten Aspekt der Erfindung umfasst einen Korpus mit einem Aufsteckabschnitt und einem Anschlussabschnitt. Der Aufsteckabschnitt weist eine topfförmig geschlossene Form auf, deren Kontur dem Kragen der Einbau-Anschlussvorrichtung gemäß dem ersten Aspekt der Erfindung folgt, und die dazu eingerichtet ist, den Kragen zu umschließen. Im oder am Boden des Aufsteckabschnitts sind eine oder mehrere zweite Leitungsverbindungsvorrichtungen angeordnet, welche mit entsprechenden ersten Leitungsverbindungsvorrichtungen der Einbau-Anschlussvorrichtung korrespondieren und zu deren Kontaktierung eingerichtet sind. Im Innern der topfförmig geschlossenen Form am Boden des Aufsteckabschnitts oder bodennah entlang der Innenseite der topfförmig geschlossenen Form ist ein Dichtmittel angeordnet, welches dazu eingerichtet ist, mit dem Kragen der Einbau-Anschlussvorrichtung im verbundenen Zustand zusammenzuwirken und den von dem Kragen der Einbau-Anschlussvorrichtung gebildeten Innenraum zum Boden der topfförmig geschlossenen Form hin abzudichten. Jeweils mit einer zweiten Leitungsverbindungsvorrichtung verbundene Leitungen sind fluiddicht durch den Boden der topfförmig geschlossenen Form hindurch- und in den Anschlussabschnitt hineingeführt und der Anschlussabschnitt führt die Leitungen dichtungslos aus der Aufsteck-Anschlussvorrichtung heraus. Alternativ sind jeweils mit einer zweiten Leitungsverbindungsvorrichtung verbundene Leitungen dichtungslos durch den Boden der topfförmig geschlossenen Form hindurch- und in den Anschlussabschnitt hineingeführt, und der Anschlussabschnitt führt die Leitungen durch ein Dichtmittel aus der Aufsteck-Anschlussvorrichtung heraus, oder der Anschlussabschnitt führt die Leitungen in ein über ein Dichtmittel mit dem Anschlussabschnitt fluiddicht verbundenes Leitungsführungselement hinein.

Durch die Anordnung der Dichtungen ist sichergestellt, dass die eine Einbau-Anschlussvorrichtung und eine damit ordnungsgemäß gekoppelte Aufsteck-Anschlussvorrichtung umfassende Anschlussanordnung gegen Fluide und Festkörper abgedichtet ist, so dass weder Fluide noch Festkörper in das Gehäuse gelangen können. Dabei ist der Anschluss der Leitung an im Innern des Gehäuses angeordnete Komponenten gegenüber bisherigen Anschlussanordnungen vereinfacht.

Bei einer oder mehreren Ausgestaltungen der Aufsteck-Anschlussvorrichtung sind in der Wand der topfförmig geschlossenen Form ein oder mehrere, zum Zusammenwirken mit entsprechenden ersten Führungsstrukturen der Einbau-Anschlussvorrichtung eingerichtete, zweite Führungsstrukturen vorgesehen. Alternativ oder zusätzlich sind an oder in der Wand der topfförmig geschlossenen Form ein oder mehrere zweite Verriegelungsstrukturen vorgesehen, welche dazu eingerichtet sind, mit der einen oder den mehreren ersten Verriegelungsstrukturen der Einbau-Anschlussvorrichtung zusammenzuwirken.

Bei einer oder mehreren Ausgestaltungen der Aufsteck-Anschlussvorrichtung umfassen die eine oder mehreren zweiten Leitungsverbindungsvorrichtungen Fluidkupplungen oder elektrisch leitende Kontaktstifte, Kontakthülsen oder Federklemmen.

Ein Verfahren zur Montage einer Einbau-Anschlussvorrichtung gemäß dem ersten Aspekt der Erfindung umfasst das Bereitstellen eines Gehäuses mit einer Gehäuseöffnung und einer oder mehreren innerhalb des Gehäuses angeschlossenen Leitungen, sowie eines Korpus der Einbau-Anschlussvorrichtung. Die einen oder mehreren Leitungen werden zunächst durch die Gehäuseöffnung aus dem Innern des Gehäuses herausgeführt. Falls die einen oder mehreren Leitungen noch nicht mit ersten Leitungsverbindungsvorrichtungen versehen sind, umfasst das Verfahren außerdem das Bereitstellen von ersten Leitungsverbindungsvorrichtungen und das Verbinden jeder der einen oder mehreren Leitungen mit jeweils einer ersten Leitungsverbindungsvorrichtung. Sofern die mit Leitungen verbundenen ersten Leitungsverbindungsvorrichtungen noch nicht in einem Halter gelagert und fixiert sind umfasst das Verfahren ferner das Bereitstellen einer Halterung und das Anordnen der mit Leitungen verbundenen ersten Leitungsverbindungsvorrichtungen in dem Halter. Nun wird der Halter in dem bereitgestellten Korpus aufgenommen, und die komplettierte Einbau-Anschlussvorrichtung mit ihrem Einbauabschnitt in die Gehäuseöffnung eingesetzt und darin fixiert.

### Kurze Beschreibung der Zeichnung

Die Erfindung wird nachfolgend mit Bezug auf die Zeichnung exemplarisch beschrieben. In der Zeichnung zeigt:
- Fig. 1: Teile einer beispielhaften Anschlussanordnung bekannter Bauart,
- Fig. 2: eine Detaildarstellung der Teile der Anschlussanordnung von Figur 1,
- Fig. 3: eine komplettierte Anschlussanordnung aus Figur 1,
- Fig. 4: mehrere Leitungen zur Anordnung in einem für die Verwendung mit der erfindungsgemäßen Einbau-Anschlussvorrichtung vorgesehenen Halter vor ihrer festen Verbindung mit jeweiligen Leitungsverbindungsvorrichtungen,
- Fig. 5: zeigt die in einem Halter aufgenommenen Leitungsverbindungsvorrichtungen mit den damit verbundenen Leitungen,
- Fig. 6: eine Einbau-Anschlussvorrichtung mit darin eingesetztem Halter in einer perspektivischen Rückansicht,
- Fig. 7: die Einbau-Anschlussvorrichtung aus Figur 6 in einer Ansicht von schräg vorne,
- Fig. 8: ein zweites Ausführungsbeispiel einer Einbau-Anschlussvorrichtung in einer Ansicht von schräg vorne,
- Fig. 9: eine weitere Ansicht des zweiten Ausführungsbeispiels der erfindungsgemäßen Einbau-Anschlussvorrichtung in einer Ansicht von schräg vorne,
- Fig. 10: eine in einem Gehäuse montierte erfindungsgemäße Einbau-Anschlussvorrichtung,
- Fig. 11: ein weiteres Beispiel einer in einem Gehäuse montierten Einbau-Anschlussvorrichtung,
- Fig. 12: ein Ausführungsbeispiel eines Teils einer erfindungsgemäßen Aufsteck-Anschlussvorrichtung aufgesteckt auf einer erfindungsgemäßen Einbau-Anschlussvorrichtung,
- Fig. 13: eine in einem Gehäuse montierte erfindungsgemäße Einbau-Anschlussvorrichtung mit aufgestecktem Aufsteckabschnitt einer erfindungsgemäßen Aufsteck-Anschlussvorrichtung, und
- Fig. 14: ein exemplarisches Flussdiagramm eines Verfahrens zur Montage einer erfindungsgemäßen Einbau-Anschlussvorrichtung in einer Gehäuseöffnung.

In den Figuren können gleiche oder ähnliche Elemente mit denselben Bezugszeichen referenziert sein.

### Beschreibung von Ausführungsbeispielen

Die Figuren 1 bis 3 wurden bereits weiter oben beschrieben und werden daher nicht erneut erläutert.

Figur 4 zeigt mehrere Leitungen 170 zur Anordnung in einem für die Verwendung mit der erfindungsgemäßen Einbau-Anschlussvorrichtung 100 vorgesehenen Halter 150 vor ihrer festen Verbindung mit jeweiligen Leitungsverbindungsvorrichtungen 160. Die Leitungen sind in einem Schlauch geführt, der als Leitungsführungselement 172 dient. Die Leitungsverbindungsvorrichtungen 160, von denen aus Gründen der Übersichtlichkeit nur einige mit Bezugszeichen versehen sind, weisen einen Crimp-Anschluss 162 zur Verbindung der jeweiligen Leitung 170 auf, und sind mit Kontaktstiften 166 versehen, welche zur Verbindung mit entsprechenden Hülsen, Buchsen, Klemmfedern oder dergleichen vorgesehen sind. Zwischen dem Crimp-Anschluss 162 und dem Kontaktstift 166 ist ein Rastelement 164 angeordnet, welches zur Fixierung der Leitungsverbindungsvorrichtung 160 in dem Halter 150 dient.

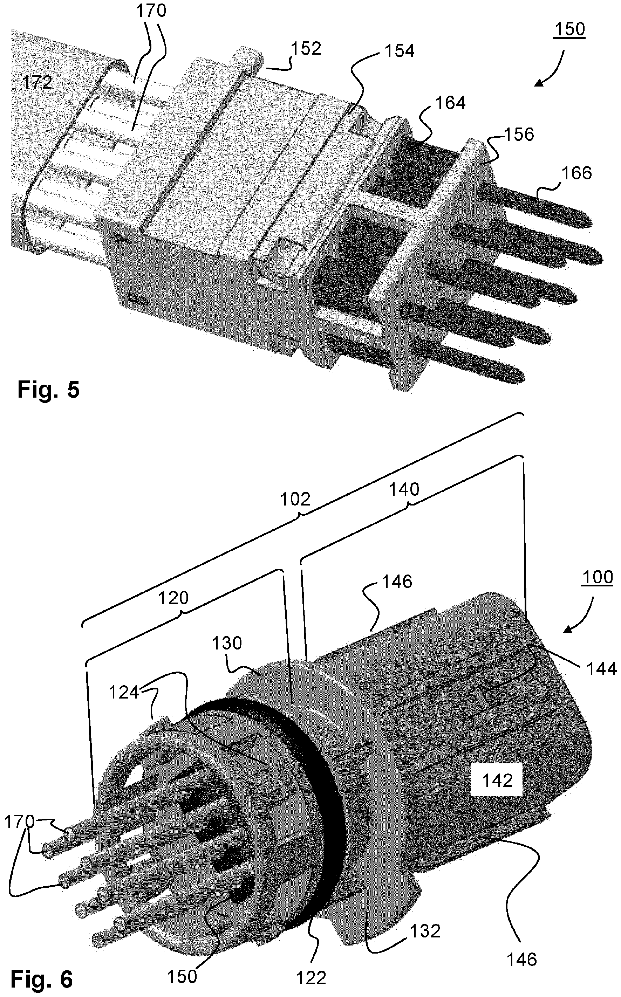

Figur 5 zeigt die in einem Halter 150 aufgenommenen Leitungsverbindungsvorrichtungen 160 mit den damit verbundenen Leitungen 170. In der Figur ist klar zu erkennen, wie die Rastelemente 164 der Leitungsverbindungsvorrichtungen 160 sich an dem Halter 150 abstützen und das Lösen der Leitungsverbindungsvorrichtungen 160 aus dem Halter 150 verhindern. Die Kontaktstifte 166 sind durch eine Frontplatte 156 geführt und in ihrer Position fixiert. An dem Halter 150 ist ein Rastelement 154 vorgesehen, dessen obere Kante mit einem entsprechenden Vorsprung in dem Korpus 102 der Einbau-Anschlussvorrichtung 100 zusammenwirkt und das Lösen des Halters 150 aus dem Korpus 102 verhindert. Das Rastelement 154 kann flexible gelagert sein oder, wie hier dargestellt, selbst flexibel sein, um durch Herunterdrücken ein Lösen des Halters 150 aus dem Korpus 102 zu ermöglichen. Ein auskragender Steg 152 dient zur korrekten Orientierung des Halters 150 im Korpus 102 der Einbau-Anschlussvorrichtung 100, welche eine entsprechende komplementäre Ausnehmung aufweist.

Figur 6 zeigt ein erstes Ausführungsbeispiel einer Einbau-Anschlussvorrichtung 100 mit darin eingesetztem Halter 150 in einer perspektivischen Rückansicht. Der Korpus 102 der Einbau-Anschlussvorrichtung 100 ist in einen Einbauabschnitt 120 mit rundem Querschnitt und einen Anschlussabschnitt 140 unterteilt, mit einer dazwischen liegenden Anschlagstruktur 138. Von dem Halter 150 ist nur die Rückseite innerhalb des Einbauabschnitts 120 erkennbar, sowie die darin angeordneten Leitungen 170, von denen aus Gründen der besseren Übersichtlichkeit nicht alle mit Bezugszeichen versehen sind. Der Einbauabschnitt 120 umfasst Fixierungsmittel 124, welche die eine Einbau-Anschlussvorrichtung 100 im in eine Gehäuseöffnung eingebauten Zustand in dieser fixieren. In dem in der Figur dargestellten Beispiel sind die Fixierungsmittel 124 flexible Rasthaken. Der Einbauabschnitt 120 umfasst au0erdem ein Dichtmittel 122, hier ein umlaufender Dichtring. Der Anschlussabschnitt 140 umfasst einen Kragen 142 mit umlaufend geschlossener Wand. An dem Kragen 142 ist eine Verriegelungsstruktur 144 erkennbar - hier als Rastnase ausgeführt. An dem Kragen sind ferner erste Führungsmittel 146 vorgesehen, welche mit entsprechenden zweiten Führungsstrukturen 246 (nicht in der Figur dargestellt) einer Aufsteck-Anschlussvorrichtung 200 (nicht in der Figur dargestellt) zusammenwirken. Die Anschlagstruktur 130 umfasst eine Positionierungsstruktur 132, welche zur Positionierung der Einbau-Anschlussvorrichtung 100 in einer Gehäuseöffnung mit einer korrespondierenden Struktur an oder in der Gehäuseöffnung zusammenwirkt.

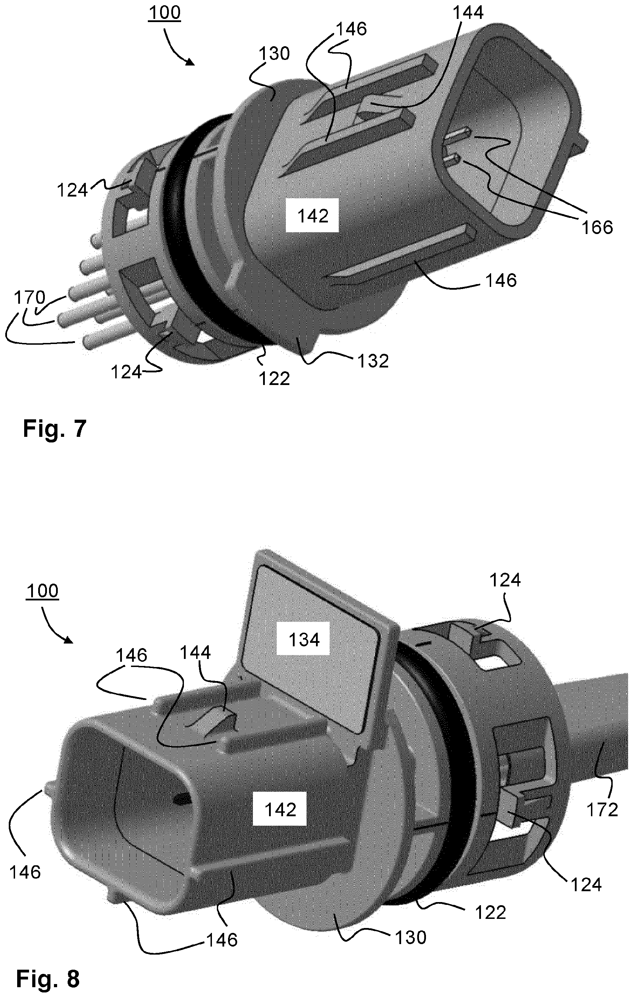

Figur 7 zeigt die Einbau-Anschlussvorrichtung 100 aus Figur 6 in einer Ansicht von schräg vorne. In dieser Ansicht ist die umlaufend geschlossene Wand des Kragens 142 gut erkennbar, ebenso wie die Kontaktstifte 166, welche in dem von dem Kragen 142 umschlossenen Raum zugänglich sind. Auch die Verriegelungsstruktur 144 und die ersten Führungsstrukturen 146 sind deutlich erkennbar.

Figur 8 zeigt ein zweites Ausführungsbeispiel einer Einbau-Anschlussvorrichtung 100 in einer Ansicht von schräg vorne. Dieses Ausführungsbeispiel entspricht im Wesentlichen dem aus den Figuren 6 und 7. Im Unterschied dazu ist hier eine parallel zu der Anschlagstruktur verlaufende, abstehende Platte 134 vorgesehen. Platte 134 kann zu Markierungszwecken genutzt werden, bspw. durch Anbringen eines Aufklebers oder durch Bedrucken. Die übrigen Elemente entsprechen denen des ersten Ausführungsbeispiels und werden an dieser Stelle nicht erneut besprochen.

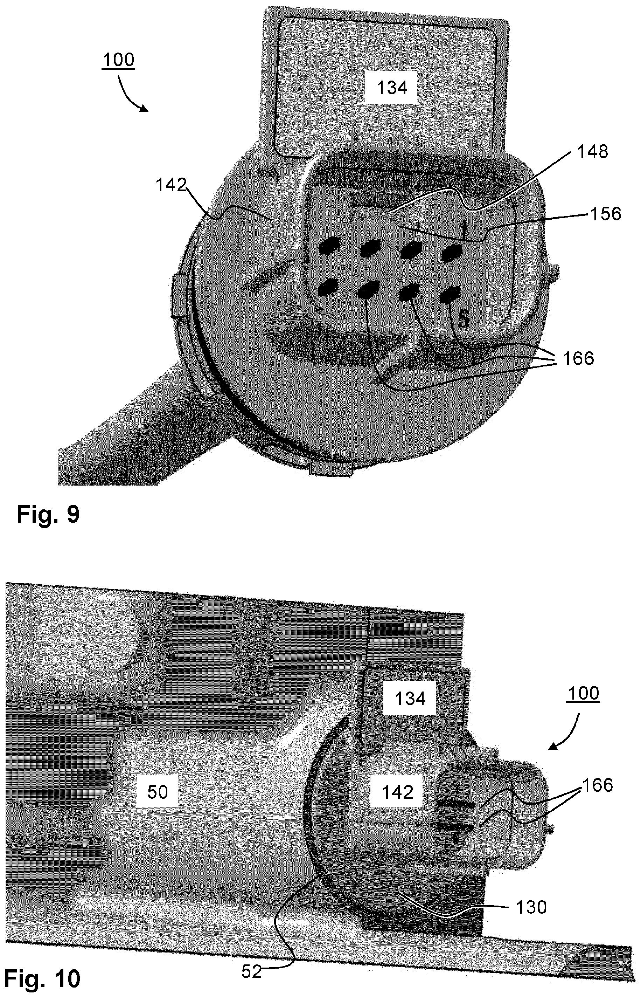

Figur 9 zeigt eine weitere Ansicht des zweiten Ausführungsbeispiels der erfindungsgemäßen Einbau-Anschlussvorrichtung 100 in einer Ansicht von schräg vorne. In dieser Ansicht ist gut erkennbar, wie die Kontaktstifte 166 in dem von dem Kragen 142 umschlossenen Raum zugänglich sind. Ebenfalls erkennbar ist ein Durchbruch 148 im Boden des von dem Kragen 142 umschlossenen Raumes, durch welchen das Rastelement 154 des Halters 150 betätigbar ist. An der Unterkante des Durchbruchs 148 ist ein Teil der Frontplatte 156 des Halters 150 erkennbar.

Figur 10 zeigt eine in einem Gehäuse 50 montierte Einbau-Anschlussvorrichtung 100. Von der Gehäuseöffnung 52 ist nur noch ein Rand erkennbar, der Rest wird von der Anschlagstruktur 130 verdeckt.

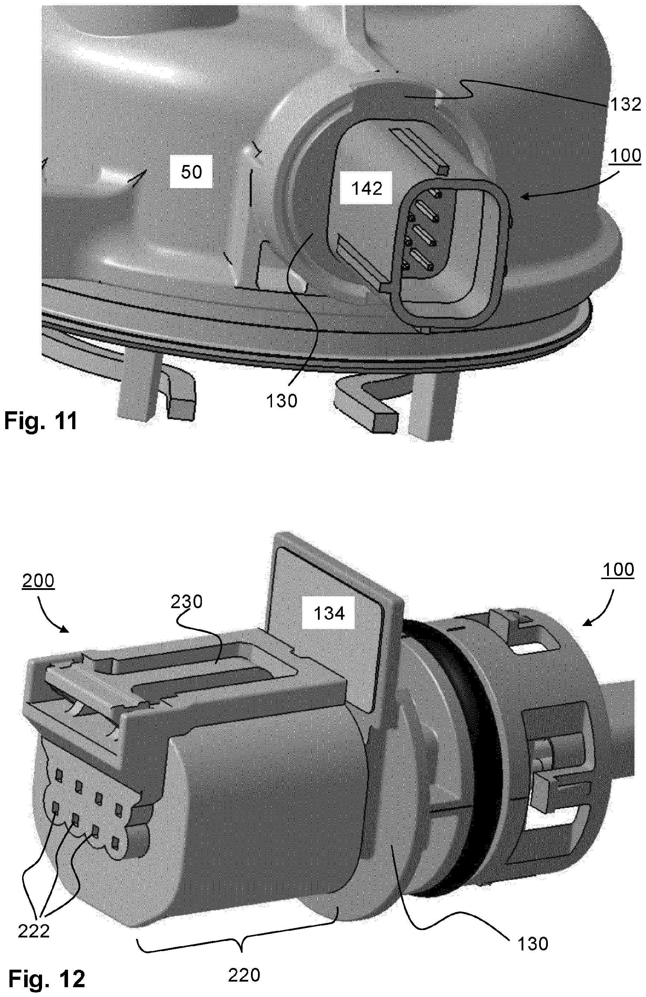

Figur 11 zeigt ein weiteres Beispiel einer in einem Gehäuse 50 montierten Einbau-Anschlussvorrichtung 100. In diesem Beispiel ist gut erkennbar, wie die Positionierungsstruktur 132 mit einer Aussparung an der Gehäuseöffnung des Gehäuses 50 korrespondiert und die Lage der Einbau-Anschlussvorrichtung 100 festlegt.

Figur 12 zeigt ein Ausführungsbeispiel eines Teils einer erfindungsgemäßen Aufsteck-Anschlussvorrichtung 200 aufgesteckt auf einer erfindungsgemäßen Einbau-Anschlussvorrichtung 100. In der Figur ist lediglich der Aufsteckabschnitt 220 dargestellt. Aufsteckabschnitt 220 weist eine topfförmig geschlossene Form auf, deren Kontur derjenigen des Kragens 142 der Einbau-Anschlussvorrichtung 100 folgt und diesen umschließt. Kragen 142 ist folglich in der Figur nicht erkennbar. In dem Aufsteckabschnitt 220 sind zweite Leitungsverbindungsvorrichtungen angeordnet, welche mit entsprechenden ersten Leitungsverbindungsvorrichtungen 160 der Einbau-Anschlussvorrichtung 100 korrespondieren und diese kontaktieren (nicht in der Figur dargestellt). Die zweiten Leitungsverbindungsvorrichtungen sind im oder am Boden des Aufsteckabschnitts 220 angeordnet; in der Figur sind nur die Durchführungen 222 erkennbar, welche mit den zweiten Leitungsverbindungsvorrichtungen verbundene Leitungen letztlich aus dem Aufsteckabschnitt 220 herausführen. An der Oberseite des Aufsteckabschnitts ist eine Verriegelungsstruktur 230 erkennbar, welche hier durch eine elastische Zunge gebildet wird, die mit der Rastnase 144 des Anschlussabschnitts 140 der Einbau-Anschlussvorrichtung 100 zusammenwirkt. Hierzu kann eine Öffnung in der Wand des Aufsteckabschnitts 220 vorgesehen sein. Anstelle einer elastischen Zunge kann auch eine elastisch gelagerte starre Zunge vorgesehen sein. In dem Aufsteckabschnitt 220 sind in der Figur nicht erkennbare Dichtmittel vorgesehen, welche mit dem Kragen der Einbau-Anschlussvorrichtung 100 zusammenwirken.

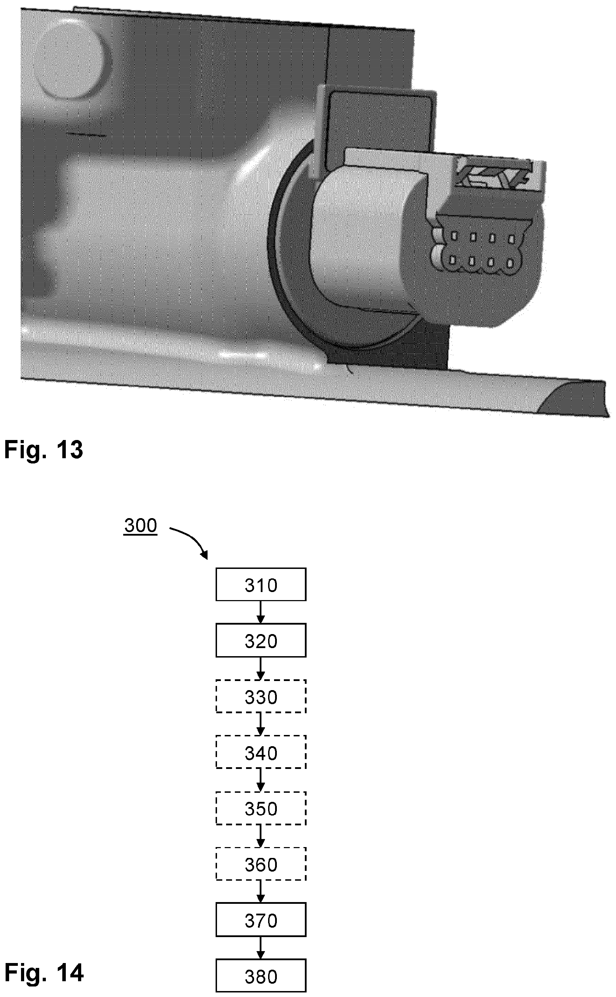

Figur 13 zeigt eine in einem Gehäuse 50 montierte erfindungsgemäße Einbau-Anschlussvorrichtung 100 mit aufgestecktem Aufsteckabschnitt 220 einer erfindungsgemäßen Aufsteck-Anschlussvorrichtung 200. In der Figur wird auf Bezugszeichen verzichtet, die einzelnen Elemente wurden bereits in den Figuren 10 und 12 beschrieben.

Figur 14 zeigt ein exemplarisches Flussdiagramm eines Verfahrens 300 zur Montage einer erfindungsgemäßen Einbau-Anschlussvorrichtung 100 in einer Gehäuseöffnung 52. In Schritt 310 wird ein Gehäuses 50 mit einer Gehäuseöffnung 52 und einer oder mehreren innerhalb des Gehäuses 50 angeschlossenen Leitungen 170, sowie ein Korpus 102 der Einbau-Anschlussvorrichtung 100 bereitgestellt. In Schritt 320 werden die einen oder mehreren Leitungen 170 aus dem Innern des Gehäuses heraus durch die Gehäuseöffnung 52 hindurchgeführt. Falls die einen oder mehreren Leitungen 170 noch nicht mit ersten Leitungsverbindungsvorrichtungen 160 versehen sind werden in Schritt 330 ersten Leitungsverbindungsvorrichtungen 160 bereitgestellt, und in Schritt 340 jede der einen oder mehreren Leitungen 170 mit jeweils einer ersten Leitungsverbindungsvorrichtung 160 verbunden. Falls die mit Leitungen 170 verbundenen ersten Leitungsverbindungsvorrichtungen 160 noch nicht in einem Halter 150 gelagert und fixiert sind wird in Schritt 350 ein Halter 150 bereitgestellt, und in Schritt 360 werden die mit Leitungen 170 verbundenen ersten Leitungsverbindungsvorrichtungen 160 in dem Halter 150 angeordnet. In Schritt 370 wird der Halter 150 in dem Korpus aufgenommen, und abschießend wird in Schritt 380 die Einbau-Anschlussvorrichtung 100 in die Gehäuseöffnung 52 eingesetzt und darin fixiert. In der Figur sind die bedingten Schritte mit gestrichelten Boxen dargestellt.

### Bezugszeichenliste (Teil der Beschreibung)

| | | | |
|---|---|---|---|
| 10 | Anschlussanordnung | 152 | Steg |
| 12 | Leitung | 154 | Rastelement |
| 14 | Wellrohr | 156 | Frontplatte |
| 16 | Dichtung | 160 | erste Leitungsverbindungsvorrichtung |
| 18 | Hülse | | |
| 20 | Steckverbinder | 162 | Crimp-Anschluss |
| 22 | Anschlussgehäuse | 164 | Rastelement |
| 50 | Gehäuse | 166 | Kontaktstift |
| 52 | Gehäuseöffnung | 170 | Leitung |
| 100 | Einbau-Anschlussvorrichtung | 172 | Leitungsführungselement |
| 102 | Korpus | 200 | Aufsteck-Anschlussvorrichtung |
| 120 | Einbauabschnitt | 220 | Aufsteckabschnitt |
| 122 | Dichtmittel | 222 | Durchführungen |
| 124 | Fixierungsstruktur | 230 | zweite Verriegelungsstruktur |
| 130 | Anschlagstruktur | 300 | Verfahren |
| 132 | Positionierungsstruktur | 310 | Bereitstellen |
| 134 | Platte | 320 | Hindurchführen |
| 140 | Anschlussabschnitt | 330 | Bereitstellen |
| 142 | Kragen | 340 | Verbinden |
| 144 | Verriegelungsstruktur | 350 | Bereitstellen |
| 146 | erste Führungsstruktur | 360 | Anordnen |
| 148 | Durchbruch | 370 | Aufnehmen |
| 150 | Halter | 380 | Einsetzen und Fixieren |

## Patentansprüche

1. Einbau-Anschlussvorrichtung (100) zum Einbau in eine Gehäuseöffnung, umfassend einen Korpus (102) mit einem Einbauabschnitt (120) runden Querschnitts und einen Anschlussabschnitt (140), wobei der Einbauabschnitt (120) ein zur Dichtung gegenüber der Gehäuseöffnung oder der diese enthaltenden Gehäusewand eingerichtetes umlaufendes Dichtmittel (122) umfasst und am Übergang zu dem Anschlussabschnitt (140) von einer Anschlagstruktur (138) begrenzt ist, wobei der Einbauabschnitt (120) außerdem eine oder mehrere zur Fixierung des Einbauabschnitts (120) in der Gehäuseöffnung bzw. an der die Gehäuseöffnung umgebenden Wand eingerichtete Fixierungsstrukturen (124) aufweist, wobei auf der dem Einbauabschnitt (120) gegenüberliegenden Seite der Anschlagstruktur (130) ein Kragen (142) mit umlaufend geschlossener Wand an die Anschlagstruktur angeformt ist, wobei in dem Korpus (102) ein Halter (150) entnehmbar dichtungslos gelagert und fixiert ist, welcher Halter (150) zur lösbaren dichtungslosen Aufnahme einer oder mehrerer erster Leitungsverbindungsvorrichtungen (160) eingerichtet ist, welche jeweils eine Verbindungsstelle einer damit verbundenen Leitung (170) für eine entsprechende, in einer mit dem Anschlussabschnitt (140) gekoppelten Aufsteck-Anschlussvorrichtung (200) nach einem oder mehreren der Ansprüche 5 bis 7 vorgesehenen zweiten Leitungsverbindungsvorrichtung bereitstellen, wobei der Halter so in dem Korpus (102) gelagert ist, dass die eine oder mehreren ersten Leitungsverbindungsvorrichtungen (160) innerhalb des von der Kragenwand umschlossenen Raums zugänglich sind.

2. Einbau-Anschlussvorrichtung (100) nach Anspruch 1, wobei die eine oder mehreren ersten Leitungsverbindungsvorrichtungen (160) Fluidkupplungen oder elektrisch leitende Kontaktstifte, Kontakthülsen oder Federklemmen umfassen.

3. Einbau-Anschlussvorrichtung (100) nach Anspruch 1 oder 2, wobei an der Kragenwand eine oder mehrere erste Führungsstrukturen (146) zur Positionierung und/oder Führung einer Aufsteck-Anschlussvorrichtung (200) vorgesehen sind und/oder wobei an der Kragenwand eine oder mehrere erste Verriegelungsstrukturen (144) zur Verriegelung einer mit dem Anschlussabschnitt (140) gekoppelten Aufsteck-Anschlussvorrichtung (200) nach einem oder mehreren der Ansprüche 5 bis 7 vorgesehen sind.

4. Einbau-Anschlussvorrichtung (100) nach einem der Ansprüche 1 bis 3, wobei an der Anschlagstruktur (130) eine oder mehrere Positionierungsstrukturen (132) zur Positionierung der Einbau-Anschlussvorrichtung (100) in einer Gehäuseöffnung vorgesehen sind.

5. Aufsteck-Anschlussvorrichtung (200) zur Verbindung mit einer Einbau-Anschlussvorrichtung (100) nach einem der Ansprüche 1 bis 4, umfassend einen Korpus mit einem Aufsteckabschnitt (220) und einem Anschlussabschnitt, wobei der Aufsteckabschnitt (220) eine topfförmig geschlossene Form aufweist, deren Kontur dem Kragen (142) der Einbau-Anschlussvorrichtung (100) nach einem oder mehreren der Ansprüche 1 bis 4 folgt und die dazu eingerichtet ist, den Kragen (142) zu umschließen, wobei am oder im Boden des Aufsteckabschnitts (220) eine oder mehrere zweite Leitungsverbindungsvorrichtungen angeordnet sind, welche mit entsprechenden ersten Leitungsverbindungsvorrichtungen (160) der Einbau-Anschlussvorrichtung (100) korrespondieren und zu deren Kontaktierung eingerichtet sind, wobei im Innern der topfförmig geschlossenen Form am Boden des Aufsteckabschnitts (220) oder bodennah entlang der Innenseite der topfförmig geschlossenen Form ein Dichtmittel angeordnet ist, welches dazu eingerichtet ist, mit dem Kragen (142) der Einbau-Anschlussvorrichtung (100) im verbundenen Zustand zusammenzuwirken und den von dem Kragen (142) der Einbau-Anschlussvorrichtung (100) gebildeten Innenraum zum Boden der topfförmig geschlossenen Form hin abzudichten, wobei jeweils mit einer zweiten Leitungsverbindungsvorrichtung verbundene Leitungen fluiddicht durch den Boden der topfförmig geschlossenen Form hindurch- und in den Anschlussabschnitt hineingeführt sind und der Anschlussabschnitt die Leitungen dichtungslos aus der Aufsteck-Anschlussvorrichtung herausführt, oder wobei jeweils mit einer zweiten Leitungsverbindungsvorrichtung verbundene Leitungen dichtungslos durch den Boden der topfförmig geschlossenen Form hindurch- und in den Anschlussabschnitt hineingeführt sind und der Anschlussabschnitt die Leitungen durch ein Dichtmittel aus der Aufsteck-Anschlussvorrichtung (200) herausführt oder die Leitungen in ein über ein Dichtmittel mit dem Anschlussabschnitt fluiddicht verbundenes Leitungsführungselement hineinführt.

6. Aufsteck-Anschlussvorrichtung (200) nach Anspruch 5, wobei in der Wand der topfförmig geschlossenen Form ein oder mehrere, zum Zusammenwirken mit entsprechenden ersten Führungsstrukturen (146) der Einbau-Anschlussvorrichtung (100) eingerichtete, zweite Führungsstrukturen vorgesehen sind, und/oder wobei an oder in der Wand der topfförmig geschlossenen Form ein oder mehrere zweite Verriegelungsstrukturen (230) vorgesehen sind, welche dazu eingerichtet sind, mit der einen oder den mehreren ersten Verriegelungsstrukturen (144) der Einbau-Anschlussvorrichtung (100) zusammenzuwirken.

7. Aufsteck-Anschlussvorrichtung (200) nach Anspruch 5 oder 6, wobei die eine oder mehreren zweiten Leitungsverbindungsvorrichtungen Fluidkupplungen oder elektrisch leitende Kontaktstifte, Kontakthülsen oder Federklemmen umfassen.

8. Fluiddichte Anschlussanordnung umfassend eine Einbau-Anschlussvorrichtung (100) nach einem der Ansprüche 1 bis 4 und eine Aufsteck-Anschlussvorrichtung (200) nach einem der Ansprüche 5 bis 7.

9. Verfahren (300) zur Montage einer Einbau-Anschlussvorrichtung (100) nach einem der Ansprüche 1 bis 4 in einer Gehäuseöffnung, umfassend:
- Bereitstellen (310) eines Gehäuses (50) mit einer Gehäuseöffnung (52) und einer oder mehreren innerhalb des Gehäuses (50) angeschlossenen Leitungen (170), sowie Bereitstellen eines Korpus (102) der Einbau-Anschlussvorrichtung (100),
- Hindurchführen (320) der einen oder mehreren Leitungen (170) aus dem Innern des Gehäuses heraus durch die Gehäuseöffnung (52),
wobei das Verfahren (300) außerdem umfasst, falls die einen oder mehreren Leitungen (170) noch nicht mit ersten Leitungsverbindungsvorrichtungen (160) versehen sind:
- Bereitstellen (330) von ersten Leitungsverbindungsvorrichtungen (160)
- Verbinden (340) jeder der einen oder mehreren Leitungen (170) mit jeweils einer ersten Leitungsverbindungsvorrichtung (160),
wobei das Verfahren (300) außerdem umfasst, falls die mit Leitungen (170) verbundenen ersten Leitungsverbindungsvorrichtungen (160) noch nicht in einem Halter (150) gelagert und fixiert sind:
- Bereitstellen (350) einer Halterung (150), und
- Anordnen (360) der mit Leitungen (170) verbundenen ersten Leitungsverbindungsvorrichtungen (160) in dem Halter (150),
wobei das Verfahren außerdem umfasst:
- Aufnehmen (370) des Halters (150) in dem Korpus (102), und
- Einsetzen (380) und Fixieren (510) der Einbau-Anschlussvorrichtung (100) in die Gehäuseöffnung (52).
